# EUROPEAN PATENT SPECIFICATION

(11) **EP 3 185 501 B1**
(45) Date of publication and mention of the grant of the patent: **21.02.2018**
(21) Application number: 15192615.1
(22) Date of filing: 02.11.2015
(51) Int. Cl.: H04L 29/06, H04L 29/08

(54) **SYSTEMS AND METHODS FOR USER SPECIFIC DATA TRANSMISSION WITH IMPROVED DATA PROTECTION**
SYSTEME UND VERFAHREN ZUR BENUTZERSPEZIFISCHEN DATENÜBERTRAGUNG MIT VERBESSERTEM DATENSCHUTZ
SYSTÈMES ET PROCÉDÉS DE TRANSMISSION DE DONNÉES SPÉCIFIQUES D'UTILISATEUR AVEC PROTECTION DE DONNÉES AMÉLIORÉE

(43) Date of publication of application: 28.06.2017
(73) Proprietor: TALIHU GmbH, 69115 Heidelberg (DE)
(72) Inventor: Jankowfsky, Eric, 79098 Freiburg (DE); Schneider, Alexander, 79098 Freiburg (DE)
(74) Representative: Bittner, Peter

(56) References cited:
- US-A1- 2013 254 858
- US-A1- 2014 047 513
- US-A1- 2014 214 564

## Description

### Technical Field

The present invention generally relates to the exchange of digital data between computing devices in a computer network and more specifically relates to improved data protection for preserving data privacy during data exchange.

### Background

In some application scenarios users interact with computer systems in open environments. An open environment in the context of this disclosure relates to an environment where a computer terminal is operated by a user in a public space and the same terminal may be used by other users afterwards. For example, a user may interact with a terminal in a shop to define an individual collection of items to be purchased, or a user may interact with a route planning terminal at a train station to define an individual travel route. Typically, the interaction of the user with the computer requires the input of some data which provides personal information about the individual herself. For example, the traveling route of an individual or the content of the individual's shopping cart represent personal data which the individual normally does not want to share with other people in the public environment of the respective terminal. Such data which is associated with personal information provided by the individual is referred to as "personal data" hereinafter.

In some application scenarios where the individual needs to use multiple terminals at consecutive points in time for processing the personal data, typically the personal data is centrally stored (e.g., on a web server or any other appropriate storage device) and the various terminals can access the centrally stored data via pre-defined connections.

US patent application US2014/214564 A1 discloses a method for allowing multiple mobile devices to contribute items to a single shopping cart. Thereby the mobile devices are electronically paired and a first device can transmit information about an item of the shopping cart to a second device to create a synced copy of the electronic shopping cart on the second device (abstract). The solution tries to support multiple persons to contribute to the shopping of items on a single shopping list and to avoid multiple purchases of the same item when splitting the shopping list. Each customer controlling such a paired device can modify the shopping cart. Each device periodically polls the server to obtain the updates of the modified shopping cart. The server ensures that the shopping cart is correctly displayed on each mobile device without discrepancy and periodically transmits complete copies of the shopping cart to the mobile devices.

However, there is a risk that non-authorized users may get access to the personal data of the individual at one terminal while the individual is interacting with another terminal. For example, a user who collects some items using a first terminal in a first department of a shop may leave the first terminal and continue shopping on a second terminal in a second department. During this time, after the user has left the first terminal, other persons may get undesired access to the personal data of the individual at the first terminal. This problem is cascaded when further terminals are involved (e.g., in further departments, a mobile device of the individual, or a cashier system for final payment of the collected items).

Hence, there is a need to improve the protection of personal data in open environments for scenarios where an individual continues the processing of such personal data on multiple computers.

### Summary

The above described technical problems are solved by embodiments of the invention as disclosed in the independent claims.

In one embodiment, a computer system acts as a buffering system between a source computing device and a target computing device for transmitting personal data from the source computing device to the target computing device with improved data protection. The use of the disclosed buffer system enables the source and target computing systems to physically transfer the personal data of an individual from one device to the other device via the buffer system in such a way that, after the data transfer, only a single persisted copy of the personal data is available at the target computing device wherein the target computing device corresponds to the terminal which is currently being used by the individual. No persisted copies of the personal data are available at any other computing device. A persisted copy of the data structure, as used herein after, refers to a copy which is permanently stored in a memory of the respective terminal device or buffer system. Copies which are generated for example in the context of filling a stateless user interface page with the content of the local data structure for display purposes are not considered to be persisted copies within the context of this disclosure. As a consequence, it is physically impossible for unauthorized users to access the personal data of the individual from any computing device which is currently not used by the individual but which may have been used by the individual previously.

Thereby, the buffer system is a complementary system interacting with the computer system which includes the source and target computing devices. For ease of explanation, the buffer system and the complementary computer system are described together in the following by explaining their respective functions enabling the interaction which leads to the above technical effect. In the following disclosure source computing device and source device are synonyms. Equally, target computing device and target device are synonyms.

The source computing device initially receives personal data of a particular individual. The personal data includes one or more digital representations of one or more physical items wherein the physical items belong to an item selection of the individual. For example, the physical items may be selected articles on sale in a shop or selected vehicles (e.g., trains, buses, trams, etc.) being used on a travel route. Other scenarios involving other physical items where the inventive concept can be applied are apparent to a person skilled in the art.

The digital representations can be created in any appropriate manner. In one embodiment, a particular digital representation may be received from a scanner device in response to scanning a corresponding item identifier associated with a respective particular physical item. In other words, a scanner device may scan a machine readable code (e.g., a bar code, QR code, or RFID code) associated with the physical item (e.g., a product or article of manufacture) and provide the result of the scan operation as the digital representation to the source computing device. In one embodiment, a particular digital representation may be received from a computing device in response to a user input of a particular item identifier associated with a respective particular physical item. For example, a user (e.g., the individual or a sales person providing service to the individual), may enter respective product codes or select articles representing the real physical items from an online catalogue. In another example, the individual may select transportation means representing real transportation vehicles for a planned travel route from a travel information system.

The source computing device then generates a local data structure and stores the one or more digital representations in the local data structure. In other words, the local data structure is persisted in a memory of the source computing device. Any appropriate storage technology may be used. For example, the data structure may be generated in a database, a spread sheet, an XML file or other appropriate data formats to store a list of digital representations.

At one point in time, after the local data structure has been persisted, the source computing device receives a transmission request to transmit the local data structure to the target computing device. The transmission request may be a request explicitly generated by a user (e.g., the individual or sales person). For example, the user enters the address of the target computing device because the individual intends to further extend the data structure with additional personal data at the target computing device. The transmission request may also be automatically generated by the source computer system. For example, whenever a local data structure is generated or when it gets modified or when the respective user interface page is re-rendered, the source computer system may anticipate a future data transmission and trigger a corresponding transmission request.

In response to the transmission request, the source computing device transmits a copy of the local data structure to the buffer system. The buffer system then buffers the received copy. The buffer is a memory of the buffer system which is suitable to store the received data structure. State of the art RAM or ROM memory components can be used for this purpose. The transmission does not need to occur instantaneously after the receipt of the transmission request. There are embodiments described later where further steps occur between the receipt of the transmission request and the final transmission of the copy. However, without a received transmission request no transmission of the local data structure is triggered.

Once the copy of the local data structure has been sent to the buffer system, the source computing device deletes the local data structure from the source computing device so that no unauthorized access to the local data structure is possible any more via the source computing device. The deletion does not necessarily occur immediately after the transmission of the local data structure. For example, in one embodiment, the source computing device may wait until it receives a success message from the target computing device indicating that the transmitted data structure was successfully received by the target computing device. In this embodiment, the source computing device deletes the local data structure after the success message is received.

For avoiding unauthorized access to the target computing device by users other than the individual whose personal data is transmitted the target computing device is locked against unauthorized access. In other words, the target computing device expects particular login credentials to unlock the device again.

In one embodiment, such login credentials are generated by the buffer system, for example as a PIN or password which is associated with the buffered data structure. In general, the login credentials include a secret which is associated with the buffered data structure. Implementation details are explained in the detailed description. The buffer system then sends locking instructions to the target device to lock the device wherein the locking instructions provide the secret to the target device which is expected to unlock the device. Further, the login credentials are sent to the source device to provide the login credentials to the individual interacting with the source device. For example, the source device can display the received login credentials on the terminal screen of the device. In case of the login credentials being a password or a PIN the individual may remember the login credentials. In case the login credentials being a machine readable code (e.g., bar code or QR code) the individual may take a photo of the displayed code with a personal mobile device (e.g., smartphone, tablet PC, camera, etc.). The individual is now equipped with the login credentials needed to access and unlock the target device. The target device has knowledge of the secret and can therefore validate the received login credentials and finally authenticate the individual as authorized user of the target device.

If the user is authenticated by the target device (i.e., the login credentials provided the correct secret to the target device), the target device notifies the buffer system that the requesting user was authenticated and sends a retrieval request for the buffered data structure to the buffer system. The retrieval request may indicate an identifier for the buffered data structure (e.g., the identifier may be encoded in the secret). Alternatively, the buffer system associates the received copy of the local data structure with the secret once the secret is generated in response to the receipt of the local data structure copy. In this case, the secret may be sent from the target device to the buffer system to identify the respective buffered data structure.

In another embodiment, the login credentials may be generated by the source device. For example, when the individual interacts with the source device, the source device displays the personal data in a corresponding user interface page of a respective application (e.g., a shopping cart view with the individual's ordered items or a route planning view with the individuals selected transportation means, etc.). The source device can generate login credentials for the individual any time when such a user interface page is re-rendered. A re-rendering of the user interface page can indicate that the status of the local data structure has changed or that another user has started to interact with the source device. Therefore, the re-rendering of the user interface page is a good indicator for anticipating an upcoming transmission of the local data structure. In this embodiment, the source device generates new login credentials with each re-rendering of the page which ensures that the individual is provided with valid login credentials at any time while interacting with the source device.

The login credentials may be represented by a machine readable code, such as a bar code, a QR code or any other code which is appropriate encode a secret associated with the local data structure. In other words, the login credentials may encode an identifier of the local data structure or the content of the local data structure as a whole together with a secret (e.g., a token which generated based on a random number). The individual can request the machine readable code from the source device. The individual can then take a photo of the machine readable code which enables the individual to login to the target device. Alternatively, the source device may generate a printout of the machine readable code for the individual.

Advantageously, the source device displays the machine readable code to the individual only during a pre-defined time interval or until an explicit confirmation is received by the individual that the code has been saved by the individual. Advantageously, the source device is locked after the pre-defined time interval or the receipt of the confirmation. In this embodiment, the default state of the target device is locked. The target device is in expectation of receiving the login credentials.

The target device may be equipped with a scanner device configured to scan and read the machine readable code from the photo or print out provided by the individual. The target device recognizes that the machine readable code relates to the local data structure which is to be transmitted to the target device. The target device can further extract the encoded secret from the machine readable code. However, in this embodiment, the target device does not have knowledge of the secret and, therefore, cannot perform the authentication of the user. The target device sends a retrieval request for the data structure which is indicated in the machine readable code to the buffer system. Further, the target device sends the extracted token to the buffer system. In some embodiments, the address of the source device may also be encoded in the machine readable code which includes the login credentials. In this case the source device address can also be sent to the buffer system. The buffer system then generates an authentication request with the received token. In case the source device address is already known by the buffer system, the buffer system can directly forward the authentication request with the token to the source device. In case the source system was not encoded in the machine readable code with the login credentials, the buffer system may forward the authentication request to all connected terminal devices. In this case, the source device will also receive the authentication request from the buffer system.

The source device has originally generated the machine login credential including the token and is therefore capable of validating the token. For example, the source device may store a list of all tokens which were used for generation of a machine readable code associated with a local data structure display by the source device terminal. If the token received via the authentication request is included in the list of tokens generated by the source device then the token is valid and the user who tries to login at the target device with this token is authenticated by the source device.

In this embodiment, the source device interprets the authentication request as the transmission request for transmitting a copy of the local data structure to the buffer system. If the user authentication is successful (i.e., the token is valid), a copy of the local data structure is sent to the buffer system in response to the transmission request (authentication request). The receipt of the data structure copy by the buffer system indicates to the buffer system that the user authentication in response to the authentication request was successful. That is, the receipt of the buffered copy at the buffer system is interpreted by the buffer system as an authentication notification from the source system to the buffer system regarding the authentication of the target device user.

In all embodiments, the buffer system finally provides a copy of the buffered data structure to the target device in response to the retrieval request and the successful authentication of the requesting user. That is, if the requesting user is in possession of the correct login credentials for accessing the buffered data structure there is a high likelihood that the requesting user corresponds to the individual whose personal data is encoded in the buffered data structure.

Once the target device has received the copy of the buffered data structure, the target system can release the received data structure for the user who logged in with the corresponding login credentials. The buffer system then deletes the buffered data structure. If not already done, also the source device also deletes the local data structure. In one embodiment, this may occur in response to a success message from the target device to the buffer system indicating that the target device has successfully received the copy of the buffered data structure. The buffer system may forward the success message to the source device as a trigger to delete the local data structure.

However, the source device and buffer system may delete their copies independent of a success message. For example, they may delete their local copies of the data structure right after having forwarded a copy of the data structure to the respective destination (e.g., buffer system, target device). Waiting for a success message can improve the robustness of the data transmission because at least one copy of the local data structure will always be available until a copy is finally received by the target device. In this case a loss of a copy during data transmission can be recovered.

In all embodiments, at the end of the transmission of the data structure from the source device to the target device, the copy of the data structure persisted at the target device remains the only persisted copy of the individual's personal data in the entire computer system. This ensures that no other terminal device than the target device can be used to get access to the personal data of the individual.

Embodiments of the invention include the buffer system, a computer-implemented method executed by the buffer system and a corresponding computer program product as well as the complementary computer system including the terminal devices interacting with the buffer system, computer-implemented methods executed by the terminal devices and corresponding computer program products.

Further aspects of the invention will be realized and attained by means of the elements and combinations particularly pointed out in the appended claims. It is to be understood that both, the foregoing general description and the following detailed description are exemplary and explanatory only and are not restrictive of the invention as described.

### Brief Description of the Drawings

FIG. 1 is a simplified component diagram of a computer system for data transmission with a source computing device, a target computing device and a buffer system operated according to embodiments of the invention;
FIG. 2 is a simplified flow chart of a computer-implemented method for data transmission performed by the source and target computing devices according to an embodiment of the invention;
FIG. 3 is a simplified flow chart of a computer-implemented method for data transmission performed by the buffer system according to an embodiment of the invention;
FIG. 4 illustrates user authentication by the computer system according to a first embodiment of the invention;
FIG. 5 illustrates user authentication by the computer system according to a second embodiment of the invention; and
FIG. 6 is a diagram that shows an example of a generic computer device and a generic mobile computer device, which may be used in embodiments of the invention.

### Detailed Description

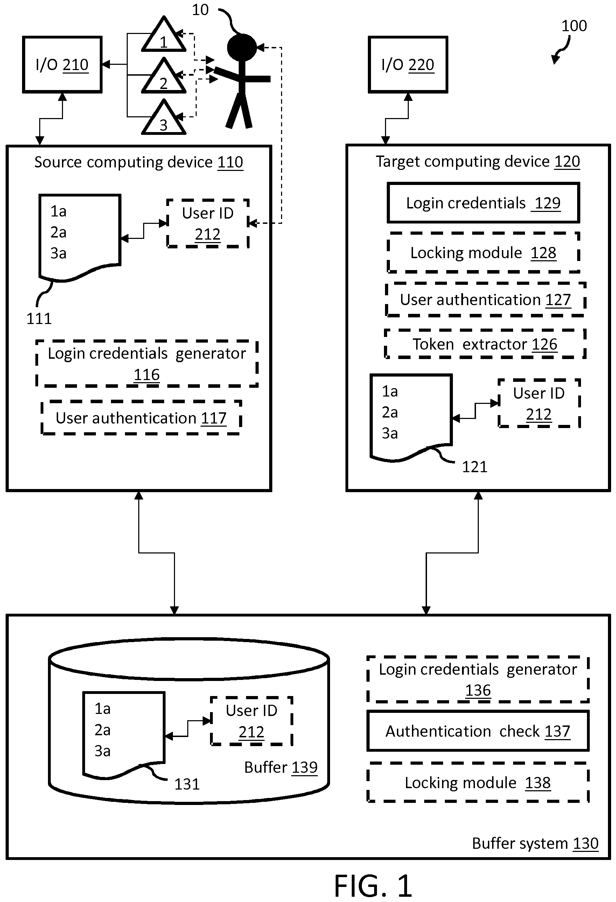

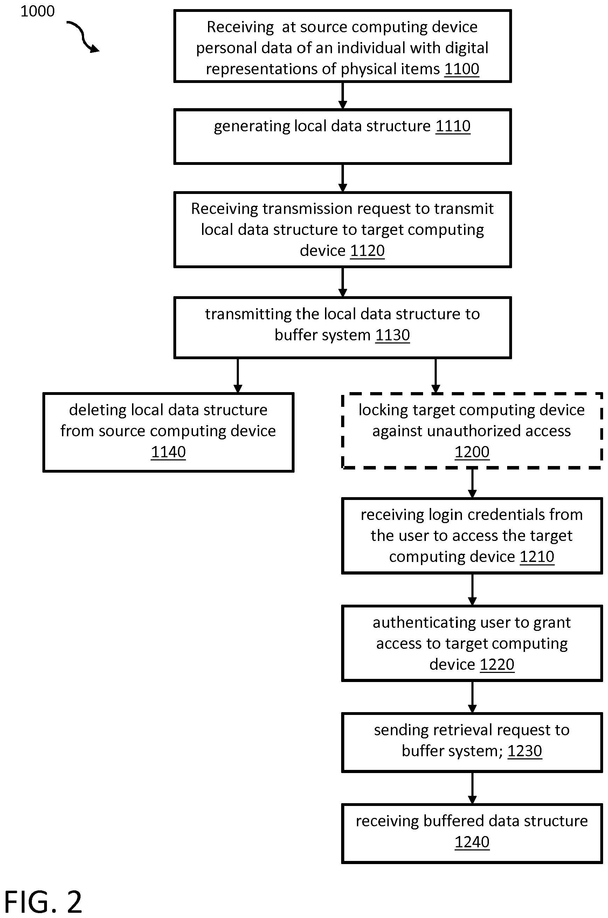

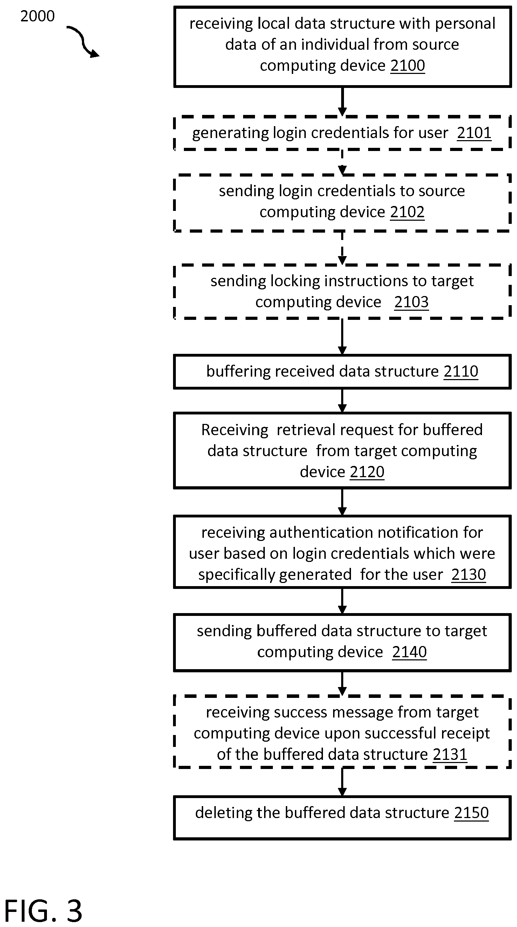

FIG. 1 is a simplified component diagram of a computer system 100 for data transmission with a source computing device 110, a target computing device 120, and a buffer system 130 operated according to embodiments of the invention. System components with a dashed frame are considered to be optional components for the respective device or system. FIG. 1 is described in the context of FIGs. 2 and 3 and reference signs of FIGs. 1, 2 and 3 are therefore used in the following description. It is to be noted that the method steps of the methods 1000 and 2000 as illustrated in the simplified flow charts are not necessarily executed in the order as shown. The description discloses alternative embodiments where some of the method steps may be executed in a different order.

For the description of the various embodiments one example scenario is described in detail. However, it is not intended that the invention is limited in any way by the described example. Rather, a person skilled in the art will be able to apply the technical teaching of this disclosure to any appropriate application scenario. In the example scenario, an individual 10 is in a shop to buy some products (physical items 1, 2, 3) offered by the shop. The shop may have several departments and the individual 10 may visit a first department to select some products for buying and later visit a second department for selecting further products. Finally the individual checks out at a cashier. But instead of physically carrying the identified products (in a physical shopping cart) from the first to the second department, the individual 10 may use the computer system 100 with a virtual shopping cart according to embodiments of the invention. For this purpose, the individual (or a sales person servicing the individual) creates a virtual shopping cart (local data structure 111) which includes digital representations 1a, 2a, 3a of the selected products 1, 2, 3 on a first public terminal (source device 110). The source device 110 may be installed in a particular shop department (e.g., sports). Assuming that the products are a pair of skis 1, skiing boots 2 and a skiing helmet 3, for example the digital representations can include article numbers under which the products are registered in the computer system 100 of the shop. Such functionality is typically provided by so-called enterprise resource planning systems. The computer system 100 may include such functions or may be communicatively coupled with a system providing such functions. For ease of illustration, the respective components providing such functions are not shown in FIG. 1. Persons of skill in the art can implement such functions without further explanation. The individual may want to continue shopping in another department to buy further articles/products. For example, she may want to get specific skiing underwear. For this purpose the local shopping cart 111 needs to be transmitted to a second terminal (target device 121) located in the shop department for underwear while after the transmission the shopping cart should not be available at the source device 110 in the sports department to avoid that any other subsequent user of the first terminal could get unauthorized access to the shopping cart of the individual.

A further application scenario is briefly described which will not be used further in the detailed description. However, a person skilled in the art can easily apply the inventive concept to this further scenario as well as to other similar situations. In the further scenario, the individual is in a traveling service center at a public route planning terminal (source device 110) which allows to plan traveling routes to a particular destination by combining different transportation means for different part of the travel route. In this scenario the physical items selected by the individuals may be a shuttle bus 1 for the way to the train station, a train 2 for the major part of the route, and a metro 3 at the final destination to get to a hotel. The individual may select the transportation means to create a route data structure with digital representations 1a, 2a, 3a of the respective transportation means 1, 2, 3. The route data structure needs then to be transmitted to a public ticket terminal (target device 120) for generating and printing the respective tickets for the individual. Again, once the individual has moved to the ticket terminal 120, the personal data regarding the personal route information should not be accessible any more from the public route planning terminal 110.

Turning back to the shop scenario, after the individual 10 has made the selection of products 1, 2, 3 for adding them to her virtual shopping cart 111, the products may be scanned by a respective code reader. For example the code reader is communicatively coupled with the source device 110 as part of the I/O means 210 of the source device. Standard readers, such as RFID readers, barcode readers, or QR code readers may be used to automatically read the article or product code of the physical items 1, 2, 3 and provide a digital representation of each item to the source device 110. In another embodiment, the digital representations may be directly entered via an appropriate user interface (e.g., using a keyboard 210 to type the product identifiers or using a mouse 210 or a touch screen 210 to select the digital representations from an online catalogue storing digital representations 1a, 2a, 3a of the respective physical products 1, 2, 3. In other words, the source device receives 1100 the digital representations 1a, 2a, 3a which are part of the personal data of the individual 10. The information that the individual 10 has selected products 1, 2, 3 is protected against unauthorized access, as explained in the following.

A software application which is run by the source device then generates 1110 the shopping cart as local data structure 111 in a memory portion of the source device 110. For this purpose the digital representations are stored in the local data structure in any appropriate format. For example, the digital representations may simply be stored in a respective database table. Alternatively, they may be stored in a spreadsheet or in an XML file. Any other appropriate format may be used. The local shopping cart data structure 111 is only persisted at the source device 110 at this point in time. That is, right after the generation of the shopping cart data structure there is only one local persisted copy of the shopping cart at the source device and no further copy is stored at any remote or central computing device.

In one embodiment, the individual 10 may be a registered user in the computer system 100. In this embodiment the user has a user account with a user identifier (ID) 212. The user ID 212 of the individual 10 can be associated with the local data structure111 storing the personal content of the individual's shopping cart.

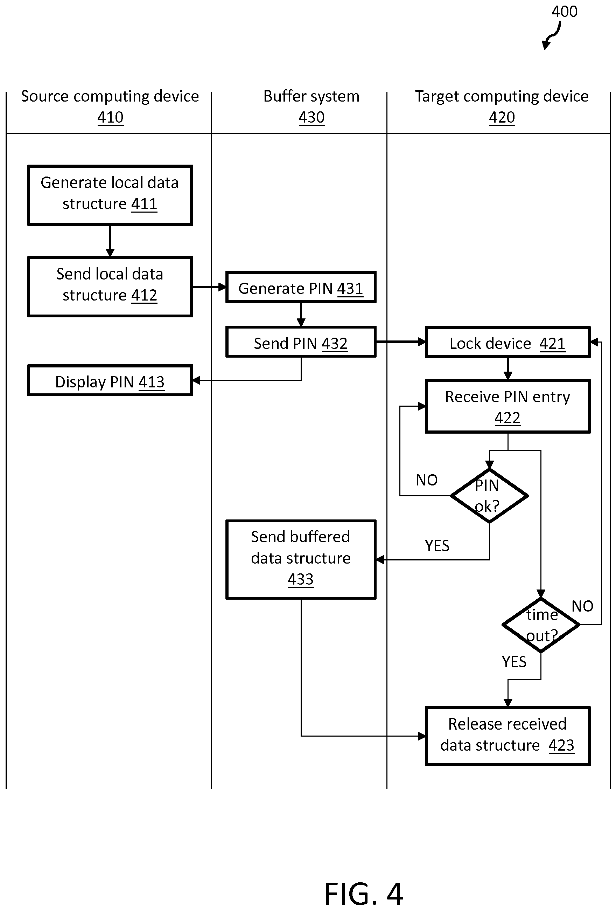

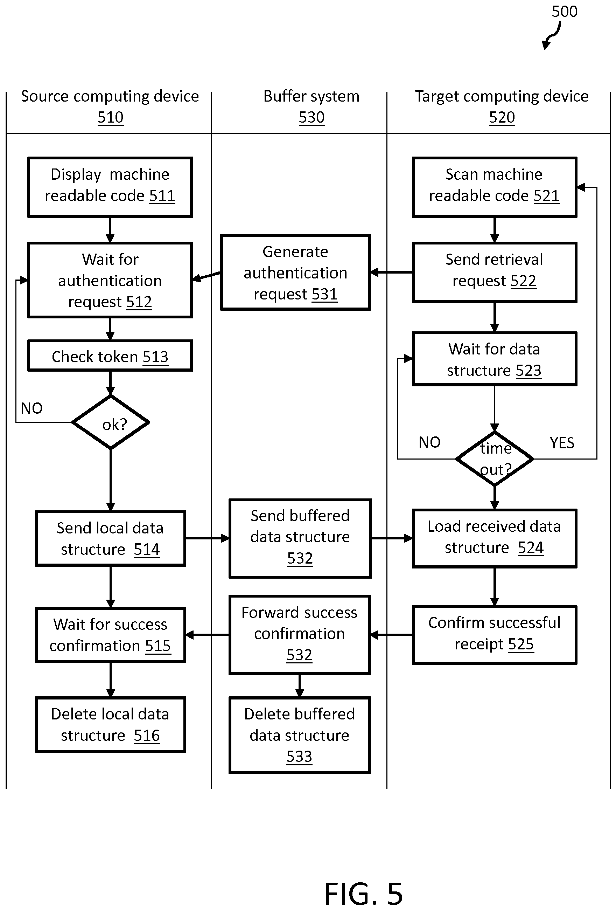

The source device 110 then receives 1120 a transmission request to transmit a copy of the individual's local shopping cart 111 from the source terminal 110 in the sports department to a target terminal 120 in the underwear department. In one embodiment, the transmission request can be directly triggered by the individual or a sales person via the I/O means 210. For example, a software application running on the source device may provide an overview of currently unused potential target devices. The user of the source device may select the target terminal 120 through the user interface means 210 from the list of currently available target terminals. In another embodiment, the transmission request is generated automatically in response to the attempt of the user to log into the target device 120. The two embodiments are described in detail in FIGs. 4 and 5. The optional components login credentials generator 116 and user authentication 117 of the source device 110 relate to the embodiment of FIG. 5 where the source device is involved in authenticating 1220 a user to grant access to the target device 120. A detailed disclosure is included in the description of FIG. 5.

In response to the transmission request, the source device 110 transmits 1130 a copy of the local shopping cart 111 to the buffer system 130. Optionally, in case a user ID 212 is associated with the local shopping cart 111, the user ID is also transmitted to the buffer system 130. In one embodiment, the source device may delete 1140 the local shopping cart 111 right after the transmittal of the copy to the buffer system. In another embodiment, the deletion 1140 of the local shopping cart may be deferred until the source device 110 receives confirmation from the target device 120 that the content of the local shopping cart was successfully received by the target device.

The buffer system 130 fulfills a central routing function for routing the content of local data structures from the any source device to any target device of the computer system 100. Thereby, the buffer system 130 receives 2100 the copy of the local data structure from the source device 110 and buffers 2110 the copy in the buffer 139. That is, the received copy is stored or persisted in a memory component of the buffer system which is configured accordingly.

In one embodiment, the buffer system has a login credentials generator 136 and a locking module 138. These optional components can execute the optional method steps 2101, 2102 and 2103 of method 2000. Thereby, the optional steps may also be executed after the buffering step 2110. The login credentials generator 136 may generate 2101 login credentials for a user (e.g., the individual 10) to access the target device 120. However, at this time the individual is still interacting with the source device 110. Therefore, the generator 136 is sending 2102 the generated login credentials to the source device 110 where the source device provides the received login credentials to the individual 10 via the I/O means 210. For example, the login credentials may be generated as a secret PIN, password or other secret code which is displayed to the individual on a display of the source device terminal. For example, in one embodiment, the source device may inform the individual that login credentials for the target terminal in the underwear department were received and are available for display. The individual 10 may trigger the display of the secret information if the public space around the sports department terminal 110 is empty enough so that not risk of eavesdropping exists. In an alternative, the source device 110 can print the login credentials for the target device on a piece of paper.

When the buffer system sends 2102 the login credentials to the source device it also sends 2103, substantially simultaneously (i.e., at the same time or shortly before or shortly after the sending step 2102), locking instructions to the target device 120. The locking instructions cause the locking module 128 of the target device target device to lock 1200 the device against unauthorized access. The locking instructions also include the generated login credentials so that, in this embodiment, the target device 120 becomes enabled to authenticate a user who tries to access the target system by entering login credentials. The optional user authentication steps at the target device can be performed by the optional user authentication component 127 of the target device. The login credentials component 129 is configured to receive the login credentials from a user via the I/O means 220 of the target device and further process the login credentials as described for the different embodiments. Thereby, the user may either enter a password or PIN or the like or the user may provide a machine readable code encoding the login credentials to a respective code reader device. If the login credentials received 1210 by the target device from a user correspond to the login credentials which were received from the buffer system 130, the user authentication component 127 authenticates 1220 the user as the individual 10 and grants access to the target device 1220.

In all embodiments, the buffer system 130 receives 2120 a retrieval request for the buffered data structure 131. However, the point in time when the retrieval request is received by the buffer system depends on the respective embodiment of the user authentication 1220 mechanism. In the embodiment of FIG. 4, the buffer system receives 2130 the retrieval request after the authentication of the user by the target device as described in more detail in the description of FIG. 4. The authentication notification is also received 2130 from the target device.

In the embodiment of FIG. 5, the retrieval request is received from the target device 120 before the user is authenticated by the source device 110 as described in more detail in the description of FIG. 5. In this embodiment, the target device 120 already generates the retrieval request in response to scanning a machine readable code which was generated by the login credentials generator 116 of the source device as the login credentials for the individual 10. The machine readable code received by the login credentials component 129 includes a secret which is extracted by the token extractor 126 of the target device. The retrieval request and the extracted token are then sent to the buffer system 130. As, in this embodiment, the user authentication is performed by the source device, the authentication notification is received 2130 from the source device 110 while the retrieval request was received 2120 from the target device.

In all embodiments, the buffer system 130 sends 2140 a copy 121 of the buffered data structure 131 to the target device120 after a corresponding retrieval request has been received 2120 and a respective authenticating notification has been received 2130. Further, the buffer system deletes 2150 the buffered data structure after the copy 121 has been sent to the target device 120.

In one embodiment, the target device sends a success message to the buffer system 130 upon successful receipt of the copy 121 of the shopping cart data structure to indicate to the buffer system that the individual 10 can now have full access to her personal shopping cart at the target device. The personal data have been successfully transmitted from the source device where the personal shopping cart was initially created as a local data structure. In this embodiment, the buffer system deletes 2150 the buffered data structure 131 upon receipt 2131 of the success message. Further, in this embodiment, the buffer system can forward the success message to the source device which may delay deletion 1140 of the local shopping cart data structure 111 until the receipt of the success message. This embodiment improves the robustness of the personal data transmission because a system failure after the generation of the local shopping cart data structure 111 will not result in the loss of the personal data. The local data structure is only deleted after the successful data transmission. Nevertheless, at the end of the successful personal data transmission the only remaining persisted copy of the shopping cart data structure is the copy 121 received by the target device 120. This ensures that no unauthorized access to the personal shopping cart can be made from any one of the other devices in the computer system 100.

FIG. 4 illustrates user authentication by the computer system 400 according to a first embodiment of the invention. In this embodiment, the source device 410 generates 411 the local shopping cart data structure while interacting with the individual or sales person and sends 412 a copy of the local data structure to the buffer system 430 upon receipt of the transmission request for transmitting the shopping cart to the target device 420. For example, the software application running on the source device may provide an overview of all available target device terminals in the shop and indicate terminals which are currently not in use by other users. The individual can select one of the available terminals as the target device, for example, in a department of the store where the individual want to continue shopping. The selection of the target device as the destination for the local shopping cart data structure can be the transmission request or can trigger the transmission request.

Upon receipt of the copy of the shopping cart data structure, the buffer system 430 generates 431 login credentials for the individual to be used at the target device 420 for gaining access. In the example, the login credentials include a secret in the format of a PIN. However, a password or a machine readable code (e.g., bar code, QR code) may equally be generated as secret. The generated login credentials are sent 432 to both, the source 410 and the target device 420. At the source device 410, the login credentials are communicated to the individual. For example, the secret is displayed 413 on a screen of the source device. In FIG. 5 some embodiments are described for displaying the secret in a manner to further improve data protection for the personal data. These embodiments can also be combined with the display function of the embodiment in FIG. 4 for improved data protection. The generated login credentials are associated with the buffered shopping cart data structure by the buffer system 430.

The target device 420 interprets the receipt of the login credentials as locking instructions to lock 421 the target device against unauthorized access and then waits to receive 422 a user entry providing the login credentials (PIN, password, etc.) which were received from the buffer system. The individual, after having moved from the source device to the target device, provides the login credentials conveyed to the individual by the source device 410. In the case of a secret PIN or password, the user may enter the secret via a keyboard or touch screen. In case of a secret machine readable code the user may use a code reader device (e.g., barcode or QR code scanner) to enter the login credentials. If the secret in the login credentials received from the user at the target device corresponds to the secret which was received from the buffer system 430 the target system has authenticated the user as the individual which is entitled to access the a shopping cart which is buffered by the buffer system. The target device sends an authentication notification to the buffer system 430 indicating the secret which was used to authenticate the user. This authentication notification serves at the same time as the retrieval request for the buffered shopping cart which is associated with said secret.

The buffer system is now in possession of the retrieval request and the authentication notification and sends 433 the requested copy of the buffered shopping cart data structure to the target device 420 where the received copy of the data structure is finally released 423 to the user.

The deletion of the local shopping cart at the source device 410 and the buffered shopping cart at the buffer system 430 can occur right after sending the respective copies of the shopping cart to their destination or upon receipt of a success message from the target system 420 indicating successful receipt of the shopping cart. Advantages and drawbacks of the respective embodiments are further detailed in the description of FIG. 5.

FIG. 5 illustrates user authentication by the computer system 500 according to a second embodiment of the invention. After the local shopping cart of the individual has been generated, a software application displays the shopping cart on the source device 510 terminal to the individual. For example, the software application may include a user interface page which is used by the individual or a sales person to interact with the source device 510 for generating the local shopping cart. In the example, the user interface page is a page running in a standard browser of the source device. For example, the software application can be executed locally by the source device or it is provided as a web service by a web server through the Internet. A person skilled in the art knows how to deploy software to the source device 510 for such application scenarios. The user interface page itself typically is stateless. That is, the displayed content is loaded from the local shopping cart data structure each time when the user interface page is re-rendered. The user interface page may be re-rendered when a new user starts to use the application but also each time when the local shopping cart is modified. That is, each time, when a digital representation is modified the page is re-rendered and reflects the current state of the local shopping cart. The source device 510 may generate a new machine readable code each time when the page is re-rendered. This machine readable code includes a token which is a secret key that may be generated as a hash value of a random number. Methods for generating such tokens are well known in the art. Further, the machine readable code includes information about the local shopping cart data structure. For example, an identifier for the local shopping cart is encoded in the machine readable code. In one embodiment, even the whole content of the shopping cart may be encoded. This allows not only the identification of a particular shopping cart, but also - optionally - the identification of the items included the shopping cart. For example, the machine readable code can be a bar code or a QR code. In an alternative embodiment, the token may be provided to the individual as a string of characters together with an ID for the shopping cart. The string may be memorized by the individual and later provided to the target device via manual data input through the individual.

The source device displays 511 the currently valid machine readable code to the individual. That is, each time when the page is re-rendered in the browser, the machine readable code display on the source device terminal is updated. The source device 511 is the only device in the computer system 511 which knows the secret token hidden in the machine readable code. The source device can store the history of all tokens generated by the source device which enables the source device 510 to validate any token request with regards to the validity of the token. The individual can then take a copy of the machine readable code and can carry this copy to a further terminal (e.g., to the target terminal). For example, the code may be printed by the source device for the individual or the individual may take a photo of the machine readable code with a personal mobile device (e.g., smartphone, camera, tablet PC, etc.). Advantageously, the copy of the machine readable code is visual in the sense that it is displayed on a display of the source device (i.e., via a user interface element), and that it can be communicated by capturing devices (such as digital cameras) that are available to the individual.

This copy of the machine readable code is then presented to the target device 520 (e.g., by the individual after having reached the terminal in the underwear department). In this embodiment, the target device 520 is equipped with a corresponding code reader device which can scan 521 the machine readable code and, thereby, extract the encoded information about the shopping cart information and the token. At this time the target device 520 does not know whether the user who presented the machine readable code is authorized to get access to the target system. Therefore, the extracted token is sent 522 to the buffer system 530 together with a retrieval request for the shopping cart being encoded in the machine readable code. The retrieval request and the token may also be sent in separate messages. Sent together in this context means that they are both sent to the buffer system before the authentication of the user. The buffer system 530 recognizes the retrieval request for the respective shopping cart data structure but cannot provide the shopping cart to the target device 520 because it has not yet received a copy of the local shopping cart of the source device and it does not know about the authorization of the requesting user at this time. Therefore, the buffer system 530 generates 531 an authorization request which includes the received token and forwards this authorization request to the source device 510. If the buffer system is connected to more than one source device it will forward the authorization request to all the source devices which can then perform the following authentication steps. In case the information in the retrieval request regarding the shopping cart includes in addition to the shopping cart ID the user ID of the individual who is associated with the shopping cart, the buffer system may identify such source devices which had an interaction with the individual in the past. In this case, the buffer system can send the authentication requests only to the identified source devices to reduce network traffic and save bandwidth.

The source device is waiting 512 for authorization requests which may correspond to one of the machine readable codes that have been generated by the source device up to this point in time. Upon receipt of the authorization request, the source device 510 checks 513 the validity of the included token by comparing the received token with the history file of tokens generated in the past. If the token is not included in the history file, the source device will not authenticate the user as a user which interacted with the source device in the past and continues to wait 512 for further authentication request. In case the token is validated by the source device as a token previously generated by the device it automatically sends 514 the local shopping cart data structure to the buffer system 530.

In this embodiment, the receipt of a copy of the local data structure by the buffer system from the source device corresponds to an authentication notification for the user associated with the retrieval request which was received earlier because the copy is only sent by the source device upon successful authentication of the user based on the token which was encoded in the earlier generated machine readable code. As a consequence, the buffer system 530 is now in possession of an authentication notification for the users and of a valid retrieval request for the buffered shopping cart data structure. Therefore, the retrieval request can be answered by the buffer system by sending 532 a copy of the buffered data structure to the target device 520. To summarize, the improved data protection for the personal data of the individual results from the use of different communication channels:
a) the individual - providing a first channel - does not need to carry the complete data structure, but only an identifier with a secret (e.g., machine readable code, including data structure ID and token), and
b) the device terminals use a second channel (the intra-device communication via the buffer system) to double-check if a shopping cart data structure is allowed to be forwarded to a requesting target device. Thereby, the second channel becomes only available after authentication of the user via the validation of the secret.

The target device may confirm 525 successful receipt to the buffer system upon having loaded 524 the received shopping cart data structure. The loaded shopping cart data structure is now available for the individual at the target device. Now the target device 520 can switch to the role of a further source device where the individual can modify the local shopping cart data structure, for example, by adding further digital representations or by deleting existing digital representations. The modified shopping cart data structure can then again be forwarded to further target devices in the same manner.

In the embodiment of FIG. 5, the buffer system 530 forwards 532 the success confirmation message to the source device 510 which waits 515 for such success confirmation until the original local shopping cart data structure is deleted 516. Also the buffer system 530 deletes 533 the buffered copy of the shopping cart upon receipt of the success confirmation message from the target device. This corresponds to the embodiment with an enhanced robustness as already explained earlier. In general, in some embodiments of the computer system 100 (cf., FIG. 1), there can be a transmission protocol for the shopping cart data structure, in that copies are forwarded from the source to the target device via the buffer system, and in that confirmation messages may follow the opposite direction and trigger the deletion of copies which are not required any more. In alternative embodiments, the source device may delete the local shopping cart immediately after having sent the copy to the buffer system 530 and the buffer system may delete the buffered shopping cart immediately after having sent the copy to the target device. In this implementation, it can be avoided that multiple copies of the personal shopping cart exist in parallel for a short period of time (until receipt of the success confirmation messages). That is, this implementation may be less robust than the previously described embodiment but has an advantage in that the data privacy of the personal data is better secured as there are no co-existing copies of the shopping cart which avoids the risk that the personal data of the individual may still be accessed by unauthorized users at the source device while the individual is moving to the target device and gets authenticated.

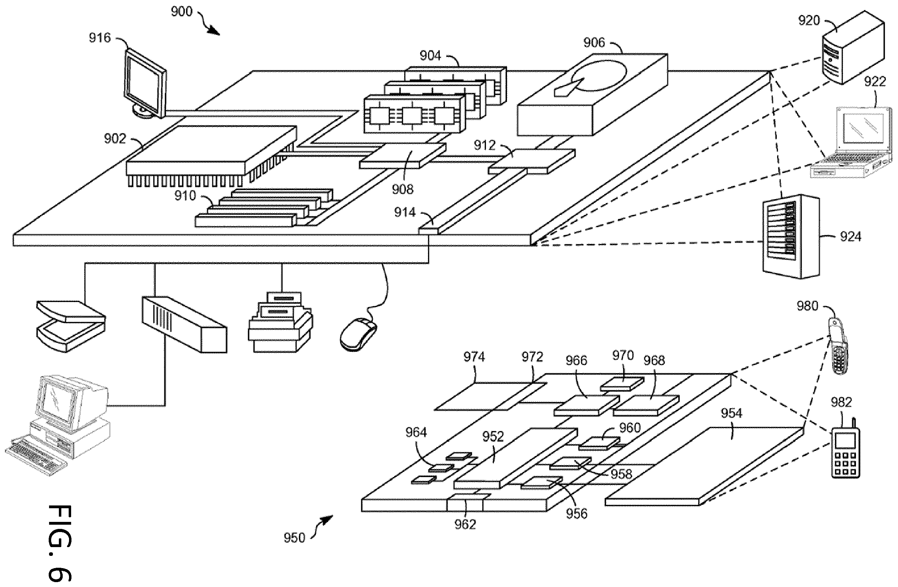

FIG. 6 is a diagram that shows an example of a generic computer device 900 and a generic mobile computer device 950, which may be used with the techniques described here. For example, computing device 900 may, for example, relate to the buffer system 130 or the computing devices 110, 120 (cf. FIG. 1). Computing device 950 is intended to represent various forms of mobile devices, such as personal digital assistants, cellular telephones, smart phones, and other similar computing devices. In the context of this disclosure the computing device 950 may serve, for example, as mobile terminal, readers for scanning machine readable codes or as personal device of the individual to carry login credentials from one terminal device to another. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. A buffer computer system (130) for user specific data transmission from a source computing device (110) to a target computing device (110) with improved data protection, the buffer system comprising:
an interface component configured to receive a copy of a local data structure (111) from the source computing device (110), the received copy being destined to be transmitted to the target computing device (120), wherein the received copy includes data with one or more digital representations (1a, 2a, 3a) of one or more physical items (1, 2, 3) wherein the physical items belong to an item selection of a particular individual (10);
a storage component (139) configured to buffer the received copy as a buffered data structure (131);
the interface component further configured to receive, from the target computing device, a retrieval request for the buffered data structure (131);
an authentication check component (137) configured to receive an authentication notification wherein the authentication notification indicates to the buffer system (130) that a user was authenticated based on login credentials which were specifically generated for the user to access a copy (121) of the buffered data structure (131) at the target computing device (120), the login credentials encoding an identifier of the local data structure (111) or the content of the local data structure (111) as a whole, together with a secret; the interface component further configured to send the copy (121) of the buffered data structure(131) to the target computing device (120) in response to the retrieval request and the authentication notification; and
the storage component (139) further configured to delete the buffered data structure (131) after the copy (121) of the buffered data structure is sent to the target computing device (120).

2. The buffer system of claim 1, further comprising:
a login credentials generator component (136) configured to generate the login credentials in response to the receipt of the copy (131) of the local data structure (111); and
a locking module (138) configured to send the login credentials to the source computing device (110), and to send locking instructions to the target computing device (121) to lock the target computing device against unauthorized access.

3. The buffer system of claim 1 or 2, wherein the interface component is further configured to receive a success message from the target computing device (121) upon successful receipt of the copy (121) of the buffered data structure; and wherein the storage component (139) is further configured to delete the buffered data structure (131) in response to the receipt of the success message and to forward the success message to the source computing device (110) as a trigger to delete the local data structure (111) on the source computing device.

4. A computer system (100) for data transmission between different computing devices, the computer system comprising:
a source computing device (110) configured to:
receive data including one or more digital representations (1a, 2a, 3a) of one or more physical items (1, 2, 3) wherein the physical items belong to an item selection of a particular individual (10);
generate a local data structure (111) and store the one or more digital representations in the local data structure;
receive a transmission request to transmit the local data structure (111) to a target computing device (120);
transmit, in response to the transmission request, a copy of the local data structure (111) to a buffer system for buffering the copy (131) of the local data structure;
delete the local data structure (111) from the source computing device (110); and
the target computing device (120) configured to :
receive login credentials from a user to access the target computing device wherein the login credentials include a secret associated with the local data structure (111); the login credentials encoding an identifier of the local data structure or the content of the local data structure as a whole, together with the secret; authenticate the user to grant access to the target computing device (120) based on the received login credentials;
sending a retrieval request to the buffer system (130) wherein the retrieval request is generated based on the login credentials to request the retrieval of the buffered data structure (131);
receive, in response to the retrieval request, a copy (121) of the buffered data structure (131) and granting access to the received data structure copy (121) for the authenticated user wherein the received data structure copy (121) remains the only persisted copy of the local data structure (111).

5. The computer system (100) of claim 4, wherein the source computing device (110) is further configured:
to display a user interface page to visualize the data including the one or more digital representations;
to generate, in response to a re-rendering of the user interface page, a machine readable code for the user as the login credentials, the machine readable code including coded information regarding the local data structure (111) and the secret;
to receive a token from the buffer system (130) wherein the token is extracted from the secret in the machine readable code;
to authenticate the user by checking the token; and
to send an authentication notification regarding the user to the buffer system (139) if the token is correct; and
wherein the target computing device is further configured to:
scan the machine readable code and to generate the retrieval request based on the coded information regarding the local data structure in the scanned machine readable code.

6. The computer system (100) of claim 4 or 5, further comprising:
the buffer system (130) according to any one of the claims 1 to 3.

7. A computer-implemented method (1000) for data transmission from a source computing device to a target computing device with improved data protection, the method comprising:
receiving (1100), by the source computing device, data including one or more digital representations of one or more physical items wherein the physical items belong to an item selection of a particular individual;
generating (1110), at the source computing device, a local data structure and storing the one or more digital representations in the local data structure;
receiving (1120), at the source computing device, a transmission request to transmit the local data structure to the target computing device;
in response to the transmission request, transmitting (1130) a copy of the local data structure to a buffer system to buffer the local data structure;
deleting (1140) the local data structure from the source computing device;
receiving (1210), at the target computing device, login credentials from a user to access the target computing device wherein the login credentials include a secret associated with the local data structure; the login credentials encoding an identifier of the local data structure or the content of the local data structure as a whole, together with the secret; authenticating (1220) the user to grant access to the target computing device based on the received login credentials;
sending (1230), by the target computing device, a retrieval request to the buffer system wherein the retrieval request is generated based on the login credentials to request the retrieval of the buffered data structure;
in response to the retrieval request, receiving (1240), at the target computing device, a copy of the buffered data structure and granting access to the received data structure for the authenticated user wherein the received data structure remains the only persisted copy of the data structure.

8. The computer-implemented method of claim 7, wherein a particular digital representation is received from a scanner device in response to scanning a corresponding item identifier associated with a respective particular physical item.

9. The computer-implemented method of claim 7, wherein a particular digital representation is received from a computing device in response to a user input of a particular item identifier associated with a respective particular physical item.

10. The computer-implemented method of any one of the claims 7 to 9, further comprising:
displaying, by the source computing device, a user interface page to visualize the data including the one or more digital representations;
in response to a re-rendering of the user interface page, generating, at the source computing device, a machine readable code for the user as the login credentials, the machine readable code including coded information regarding the local data structure and the secret;
scanning, at the target computing device, the machine readable code and generating the retrieval request based on the scanned machine readable code;
receiving, at the source computing device, a token from the buffer system wherein the token is generated from the secret in the machine readable code;
authenticating the user by checking the token at the source computing device; and if the token is correct, sending, by the source computing device, an authentication notification regarding the user to the buffer system.

11. A computer-implemented method (2000) executed by a buffer system for data transmission from a source computing device to a target computing device with improved data protection, the method comprising:
receiving (2100) a copy of a local data structure from the source computing device, the received data structure being destined to be transmitted to the target computing device, wherein the received data structure includes data with one or more digital representations of one or more physical items wherein the physical items belong to an item selection of a particular individual;
buffering (2110) the received data structure;
receiving (2120), from the target computing device, a retrieval request for the buffered data structure;
receiving (2130) an authentication notification wherein the authentication notification indicates to the buffer system that a user was authenticated based on login credentials which were specifically generated for the user to access the data structure at the target computing device, wherein the login credentials encode an identifier of the local data structure or the content of the local data structure as a whole, together with a secret; in response to the retrieval request and the authentication notification, sending a copy of the buffered data structure to the target computing device; and
deleting (2140) the buffered data structure upon receipt of the copy of the buffered data structure by the target computing device.

12. The computer-implemented method of claim 11, further comprising:
in response to receiving (2100) the local data structure:
generating (2101) the login credentials;
sending (2102) the login credentials to the source computing device; and
sending (2103) locking instructions to the target computing device to lock the target computing device against unauthorized access.

13. The computer-implemented method of claim 11 or 12, further comprising:
receiving (2131) a success message from the target computing device upon successful receipt of the buffered data structure; and
executing deleting (2140) the buffered data structure in response to the receipt of the success message and forwarding the success message to the source computing device as a trigger to delete the local data structure on the source computing device.

14. A computer program product for data transmission from a source computing device to a target computing device with improved data protection, the computer program product comprising instructions that when loaded into corresponding memory portions of terminal devices of a computer system and being executed by a plurality of processors of the terminal devices cause the terminal devices to perform the method steps according to any one of the claims 7 to 10.

15. A computer program product for data transmission from a source computing device to a target computing device with improved data protection, the computer program product comprising instructions that when loaded into a memory of a buffer system and being executed by one or more processors of the buffer system cause the buffer system to perform the method steps according to any one of the claims 11 to13.

## Patentansprüche

1. Zwischenspeicher-Computersystem (130) zum Übertragen von nutzerspezifischen Daten von einer Quell-Rechenvorrichtung (110) auf eine Ziel-Rechenvorrichtung (120) mit verbessertem Datenschutz, wobei das Zwischenspeichersystem umfasst:
eine Schnittstellenkomponente, die dafür ausgelegt ist, eine Kopie einer lokalen Datenstruktur (111) von der Quell-Rechenvorrichtung (110) zu empfangen, wobei die empfangene Kopie dafür bestimmt ist, an die Ziel-Rechenvorrichtung (120) übertragen zu werden, wobei die empfangene Kopie Daten mit einer oder mehreren digitalen Darstellungen (1a, 2a, 3a) eines oder mehrerer physischer Gegenstände (1, 2, 3) umfasst, wobei die physischen Gegenstände zu einer Auswahl von Gegenständen eines bestimmten Individuums (10) gehören;
eine Speicherkomponente (139), die dafür ausgelegt ist, die empfangene Kopie als zwischengespeicherte Datenstruktur (131) zwischenzuspeichern;
wobei die Schnittstellenkomponente ferner dafür ausgelegt ist, von der Ziel-Rechenvorrichtung eine Abrufanforderung für die zwischengespeicherte Datenstruktur (131) zu empfangen;
eine Authentifizierungsüberprüfungskomponente (137), die dafür ausgelegt ist, eine Authentifizierungsmitteilung zu empfangen, wobei die Authentifizierungsmitteilung dem Zwischenspeichersystem (130) anzeigt, dass ein Nutzer auf Basis von Anmeldedaten, die spezifisch für den Nutzer generiert wurden, authentifiziert wurde, um auf eine Kopie (121) der zwischengespeicherten Datenstruktur (131) auf der Ziel-Rechenvorrichtung (120) zuzugreifen, wobei die Anmeldedaten eine Kennung der lokalen Datenstruktur (111) oder den Inhalt der lokalen Datenstruktur (111) als Ganzes zusammen mit einem Geheimnis codieren;
wobei die Schnittstellenkomponente ferner dafür ausgelegt ist, als Reaktion auf die Abrufanforderung und die Authentifizierungsmitteilung die Kopie (121) der zwischengespeicherten Datenstruktur (131) an die Ziel-Rechenvorrichtung (120) zu senden; und
die Speicherkomponente (139) ferner dafür ausgelegt ist, die zwischengespeicherte Datenstruktur (131) zu löschen, nachdem die Kopie (121) der zwischengespeicherten Datenstruktur an die Ziel-Rechenvorrichtung (120) geschickt wurde.

2. Zwischenspeichersystem nach Anspruch 1, ferner umfassend:
eine Anmeldedatengeneratorkomponente (136), die dafür ausgelegt ist, die Anmeldedaten als Reaktion auf den Empfang der Kopie (131) der lokalen Datenstruktur (111) zu generieren; und
ein Sperrmodul (138), das dafür ausgelegt ist, die Anmeldedaten an die Quell-Rechenvorrichtung (110) zu senden und Sperranweisungen an die Ziel-Rechenvorrichtung (121) zu senden, um die Ziel-Rechenvorrichtung gegen einen unberechtigten Zugriff zu sperren.

3. Zwischenspeichersystem nach Anspruch 1 oder 2, wobei die Schnittstellenkomponente ferner dafür ausgelegt ist, nach einem erfolgreichen Empfang der Kopie (121) der zwischengespeicherten Datenstruktur eine Erfolgsmeldung von der Ziel-Rechenvorrichtung (121) zu empfangen; und wobei die Speicherkomponente (139) ferner dafür ausgelegt ist, die zwischengespeicherte Datenstruktur (131) als Reaktion auf den Empfang der Erfolgsmeldung zu löschen und die Erfolgsmeldung als Auslöser für das Löschen der lokalen Datenstruktur (111) auf der Quell-Rechenvorrichtung an die Quell-Rechenvorrichtung (110) weiterzuleiten.

4. Computersystem (100) für eine Datenübertragung zwischen unterschiedlichen Rechenvorrichtungen, wobei das Computersystem umfasst:
eine Quell-Rechenvorrichtung (110), die für folgendes ausgelegt ist:
Empfangen von Daten, die eine oder mehrere digitale Darstellungen (1a, 2a, 3a) eines oder mehrerer physischer Gegenstände (1, 2, 3) umfassen, wobei die physischen Gegenstände zu einer Auswahl von Gegenständen eines bestimmten Individuums (10) gehören;
Generieren einer lokalen Datenstruktur (111) und Speichern der einen oder der mehreren digitalen Darstellungen in der lokalen Datenstruktur;
Empfangen einer Übertragungsanforderung zum Übertragen der lokalen Datenstruktur (111) auf eine Ziel-Rechenvorrichtung (120);
Übertragen einer Kopie der lokalen Datenstruktur (111) auf ein Zwischenspeichersystem, um die Kopie (131) der lokalen Datenstruktur zwischenzuspeichern, als Reaktion auf die Übertragungsanforderung;
Löschen der lokalen Datenstruktur (111) aus der Quell-Rechenvorrichtung (110); und
wobei die Ziel-Rechenvorrichtung (120) für Folgendes ausgelegt ist:
Empfangen von Anmeldedaten von einem Nutzer, um auf die Ziel-Rechenvorrichtung (120) zuzugreifen, wobei die Anmeldedaten ein Geheimnis enthalten, das mit der lokalen Datenstruktur (111) assoziiert ist; wobei die Anmeldedaten eine Kennung der lokalen Datenstruktur oder den Inhalt der lokalen Datenstruktur als Ganzes zusammen mit dem Geheimnis codieren;
Authentifizieren des Nutzers auf Basis der empfangenen Anmeldedaten, um Zugriff auf die Ziel-Rechenvorrichtung (120) zu gewähren;
Senden einer Abrufanforderung an das Zwischenspeichersystem (130), wobei die Abrufanforderung auf Basis der Anmeldedaten generiert wird, um das Abrufen der zwischengespeicherten Datenstruktur (131) zu fordern;
Empfangen einer Kopie (121) der zwischengespeicherten Datenstruktur (131) und Gewähren eines Zugriffs auf die empfangene Datenstrukturkopie (121) für den authentifizierten Nutzer als Reaktion auf die Abrufanforderung, wobei die empfangene Datenstrukturkopie (121) die einzige bewahrte Kopie der lokalen Datenstruktur (111) bleibt.

5. Computersystem (100) nach Anspruch 4, wobei die Quell-Rechenvorrichtung (110) ferner für Folgendes ausgelegt ist:
Anzeigen einer Benutzerschnittstellenseite, um die Daten einschließlich der einen oder der mehreren digitalen Darstellungen zu visualisieren;
Generieren eines maschinenlesbaren Codes als Anmeldedaten für den Nutzer als Reaktion auf eine erneute Wiedergabe der Benutzerschnittstellenseite, wobei der maschinenlesbare Code codierte Informationen umfasst, welche die lokale Datenstruktur (111) und das Geheimnis betreffen;
Empfangen eines Tokens vom Zwischenspeichersystem (130), wobei das Token aus dem Geheimnis im maschinenlesbaren Code extrahiert wird;
Authentifizieren des Nutzers durch Überprüfen des Tokens; und
Senden einer Authentifizierungsmitteilung in Bezug auf den Nutzer an das Zwischenspeichersystem (139), falls das Token korrekt ist; und
wobei die Ziel-Rechenvorrichtung ferner für Folgendes ausgelegt ist:
Abtasten des maschinenlesbaren Codes und Generieren der Abrufanforderung auf Basis der codierten Informationen in Bezug auf die lokale Datenstruktur in dem abgetasteten maschinenlesbaren Code.

6. Computersystem (100) nach Anspruch 4 oder 5, ferner umfassend:
das Zwischenspeichersystem (130) nach einem der Ansprüche 1 bis 3.

7. Computerimplementiertes Verfahren (1000) zum Übertragen von Daten von einer Quell-Rechenvorrichtung auf eine Ziel-Rechenvorrichtung mit verbessertem Datenschutz, wobei das Verfahren umfasst:
Empfangen (1100) von Daten, die eine oder mehrere digitale Darstellungen eines oder mehrerer physischer Gegenstände umfassen, an der Quell-Rechenvorrichtung, wobei die physischen Gegenstände zu einer Auswahl von Gegenständen eines bestimmten Individuums gehören;
Generieren (1110) einer lokalen Datenstruktur an der Quell-Rechenvorrichtung und Speichern der einen oder der mehreren digitalen Darstellungen in der lokalen Datenstruktur;
Empfangen (1120) einer Übertragungsanforderung zum Übertragen der lokalen Datenstruktur auf die Ziel-Rechenvorrichtung an der Quell-Rechenvorrichtung;
Übertragen (1130) einer Kopie der lokalen Datenstruktur auf ein Zwischenspeichersystem als Reaktion auf die Übertragungsanforderung, um die lokale Datenstruktur zwischenzuspeichern;
Löschen (1140) der lokalen Datenstruktur aus der Quell-Rechenvorrichtung;
Empfangen (1210) von Anmeldedaten von einem Nutzer, um auf die Ziel-Rechenvorrichtung zuzugreifen, an der Ziel-Rechenvorrichtung, wobei die Anmeldedaten ein Geheimnis umfassen, das mit der lokalen Datenstruktur assoziiert ist; wobei die Anmeldedaten eine Kennung der lokalen Datenstruktur oder den Inhalt der lokalen Datenstruktur als Ganzes zusammen mit dem Geheimnis codieren;
Authentifizieren (1220) des Nutzers auf Basis der empfangenen Anmeldedaten, um Zugriff auf die Ziel-Rechenvorrichtung zu gewähren;
Senden (1230) einer Abrufanforderung an das Zwischenspeichersystem durch die Ziel-Rechenvorrichtung, wobei die Abrufanforderung auf Basis der Anmeldedaten generiert wird, um den Abruf der zwischengespeicherten Datenstruktur zu fordern;
Empfangen (1240) einer Kopie der zwischengespeicherten Datenstruktur an der Ziel-Rechenvorrichtung als Reaktion auf die Abrufanforderung und Gewähren eines Zugriffs auf die empfangene Datenstruktur für den authentifizierten Nutzer, wobei die empfangene Datenstruktur die einzige bewahrte Kopie der Datenstruktur bleibt.

8. Computerimplementiertes Verfahren nach Anspruch 7, wobei als Reaktion auf ein Abtasten einer entsprechenden Gegenstandskennung, die mit einem jeweiligen spezifischen physischen Gegenstand assoziiert ist, eine spezifische digitale Darstellung von einer Abtastvorrichtung empfangen wird.

9. Computerimplementiertes Verfahren nach Anspruch 7, wobei als Reaktion auf eine Nutzereingabe einer spezifischen Gegenstandskennung, die mit einem jeweiligen spezifischen physischen Gegenstand assoziiert ist, eine spezifische digitale Darstellung von einer Rechenvorrichtung empfangen wird.

10. Computerimplementiertes Verfahren nach einem der Ansprüche 7 bis 9, ferner umfassend:
Anzeigen einer Benutzerschnittstellenseite, um die Daten einschließlich der einen oder der mehreren digitalen Darstellungen zu visualisieren, durch die Quell-Rechenvorrichtung;
Generieren eines maschinenlesbaren Codes als Anmeldedaten für den Nutzer als Reaktion auf eine erneute Wiedergabe der Benutzerschnittstellenseite an der Quell-Rechenvorrichtung, wobei der maschinenlesbare Code codierte Informationen umfasst, welche die lokale Datenstruktur und das Geheimnis betreffen;
Abtasten des maschinenlesbaren Codes an der Ziel-Rechenvorrichtung und Generieren der Abrufanforderung auf Basis des abgetasteten maschinenlesbaren Codes;
Empfangen eines Tokens vom Zwischenspeichersystem an der Quell-Rechenvorrichtung, wobei das Token aus dem Geheimnis in dem maschinenlesbaren Code generiert wird;
Authentifizieren des Nutzers durch Überprüfen des Tokens an der Quell-Rechenvorrichtung; und
Senden einer Authentifizierungsmitteilung in Bezug auf den Nutzer an das Zwischenspeichersystem durch die Quell-Rechenvorrichtung, falls das Token korrekt ist.

11. Computerimplementiertes Verfahren (2000), das von einem Zwischenspeichersystem ausgeführt wird, zum Übertragen von Daten von einer Quell-Rechenvorrichtung auf eine Ziel-Rechenvorrichtung mit verbessertem Datenschutz, wobei das Verfahren umfasst:
Empfangen (2100) einer Kopie einer lokalen Datenstruktur von der Quell-Rechenvorrichtung, wobei die empfangene Datenstruktur dafür bestimmt ist, auf die Ziel-Rechenvorrichtung übertragen zu werden, wobei die empfangene Datenstruktur Daten mit einer oder mehreren digitalen Darstellungen eines oder mehrerer physischer Gegenstände umfasst, wobei die physischen Gegenstände zu einer Auswahl von Gegenständen eines bestimmten Individuums gehören;
Zwischenspeichern (2110) der empfangenen Datenstruktur;
Empfangen (2120) einer Abrufanforderung für die zwischengespeicherte Datenstruktur von der Ziel-Rechenvorrichtung;
Empfangen (2130) einer Authentifizierungsmitteilung, wobei die Authentifizierungsmitteilung dem Zwischenspeichersystem anzeigt, dass ein Nutzer auf Basis von Anmeldedaten, die spezifisch für den Nutzer generiert wurden, authentifiziert wurde, um auf die Datenstruktur an der Ziel-Rechenvorrichtung zuzugreifen, wobei die Anmeldedaten eine Kennung der lokalen Datenstruktur oder den Inhalt der lokalen Datenstruktur als Ganzes zusammen mit einem Geheimnis codieren;
Senden einer Kopie der zwischengespeicherten Datenstruktur an die Ziel-Rechenvorrichtung als Reaktion auf die Abrufanforderung und die Authentifizierungsmitteilung; und
Löschen (2140) der zwischengespeicherten Datenstruktur nach Empfang der Kopie der zwischengespeicherten Datenstruktur durch die Ziel-Rechenvorrichtung.

12. Computerimplementiertes Verfahren nach Anspruch 11, ferner umfassend:
als Reaktion auf das Empfangen (2100) der lokalen Datenstruktur:
Generieren (2101) der Anmeldedaten;
Senden (2102) der Anmeldedaten an die Quell-Rechenvorrichtung; und
Senden (2103) von Sperranweisungen an die Ziel-Rechenvorrichtung, um die Ziel-Rechenvorrichtung gegen einen unautorisierten Zugriff zu sperren.

13. Computerimplementiertes Verfahren nach Anspruch 11 oder 12, ferner umfassend:
Empfangen (2131) einer Erfolgsmeldung von der Ziel-Rechenvorrichtung nach erfolgreichem Empfang der zwischengespeicherten Datenstruktur; und
Ausführen eines Löschens (2140) der zwischengespeicherten Datenstruktur als Reaktion auf den Empfang der Erfolgsmeldung und Weiterleiten der Erfolgsmeldung an die Quell-Rechenvorrichtung als Auslöser für das Löschen der lokalen Datenstruktur an der Quell-Rechenvorrichtung.

14. Computerprogrammprodukt für eine Datenübertragung von einer Quell-Rechenvorrichtung auf eine Ziel-Rechenvorrichtung mit verbessertem Datenschutz, wobei das Computerprogrammprodukt Anweisungen umfasst, die, wenn sie in entsprechende Speicherabschnitte von Endgeräten eines Computersystems geladen werden und von einer Mehrzahl von Prozessoren der Endgeräte ausgeführt werden, bewirken, dass die Endgeräte die Verfahrensschritte gemäß einem der Ansprüche 7 bis 10 durchführen.

15. Computerprogrammprodukt für eine Datenübertragung von einer Quell-Rechenvorrichtung auf eine Ziel-Rechenvorrichtung mit verbessertem Datenschutz, wobei das Computerprogrammprodukt Anweisungen umfasst, die, wenn sie in einen Speicher eines Zwischenspeichersystems geladen werden und von einem oder mehreren Prozessoren des Zwischenspeichersystems ausgeführt werden, bewirken, dass das Zwischenspeichersystem die Verfahrensschritte gemäß einem der Ansprüche 11 bis 13 durchführt.

## Revendications

1. Système informatique à mémoire tampon (130) destiné à la transmission spécifique de données d'un dispositif de calcul source (110) à un dispositif de calcul cible (110) avec protection améliorée des données, le système à mémoire tampon comprenant :
un composant d'interface conçu pour recevoir un exemplaire d'une structure locale de données (111) depuis le dispositif de calcul source (110), l'exemplaire reçu étant destiné à être transmis au dispositif de calcul cible (120), l'exemplaire reçu comprenant des données comptant au moins une représentation numérique (1a, 2a, 3a) d'au moins un article physique (1, 2, 3), les articles physiques appartenant à une sélection d'articles d'un individu particulier (10) ;
un composant de stockage (139) conçu pour mettre en mémoire tampon l'exemplaire reçu sous forme de structure de données mises en mémoire tampon (131) ;
le composant d'interface étant en outre conçu pour recevoir, depuis le dispositif de calcul de cible, une demande de récupération de la structure de données mises en mémoire tampon (131) ;
un composant de contrôle d'authentification (137) conçu pour recevoir une notification d'authentification, la notification d'authentification indiquant au système à mémoire tampon (130) qu'un utilisateur a été authentifié en fonction de justificatifs de connexion qui ont été générés spécifiquement pour que l'utilisateur accède à un exemplaire (121) de la structure de données mises en mémoire tampon (131) au niveau du dispositif de calcul cible (120), les justificatifs de connexion codant un identifiant de la structure locale de données (111) ou du contenu de la structure locale de données (111) dans son ensemble, conjointement avec un secret ;
le composant d'interface étant en outre conçu pour envoyer l'exemplaire (121) de la structure de données mises en mémoire tampon (131) au dispositif de calcul cible (120) en réponse à la demande de récupération et à la notification d'authentification ; et
le composant de stockage (139) étant en outre conçu pour supprimer la structure de données mises en mémoire tampon (131) une fois que l'exemplaire (121) de la structure de données mises en mémoire tampon a été envoyée au dispositif de calcul cible (120).

2. Système à mémoire tampon selon la revendication 1, comprenant en outre :
un composant générateur de justificatifs de connexion (136) conçu pour produire les justificatifs de connexion en réponse à la réception de l'exemplaire (131) de la structure locale de données (111) ; et
un module de verrouillage (138) conçu pour envoyer les justificatifs de connexion au dispositif de calcul source (110), et pour envoyer des instructions de verrouillage au dispositif de calcul cible (121) pour protéger le dispositif de calcul cible contre un accès non autorisé.

3. Système à mémoire tampon selon la revendication 1 ou 2, dans lequel le composant d'interface est en outre conçu pour recevoir un message de succès depuis le dispositif de calcul cible (121) lors d'une réception réussie de l'exemplaire (121) de la structure de données mises en mémoire tampon ; et dans lequel le composant de stockage (139) est en outre conçu pour supprimer la structure de données mises en mémoire tampon (131) en réponse à la réception du message de succès et pour transmettre le message de succès au dispositif de calcul source (110) en tant que déclenchement pour supprimer la structure locale de données (111) située sur le dispositif de calcul source.

4. Système informatique (100) destiné à la transmission de données entre différents dispositifs de calcul, le système informatique comprenant :
un dispositif source de calcul (110) conçu pour :
recevoir des données comprenant au moins une représentation numérique (1a, 2a, 3a) d'au moins un article physique (1, 2, 3), les articles physiques appartenant à une sélection d'articles d'un individu particulier (10) ;
produire une structure locale de données (111) et enregistrer l'au moins une représentation numérique dans la structure locale de données ;
recevoir une demande de transmission pour transmettre la structure locale de données (111) à un dispositif de calcul cible (120) ;
transmettre, en réponse à la demande de transmission, un exemplaire de la structure locale de données (111) à un système à mémoire tampon pour mettre en mémoire tampon l'exemplaire (131) de la structure locale de données ;
supprimer la structure locale de données (111) à partir du dispositif de calcul source (110) ; et
le dispositif de calcul cible (120) étant conçu pour :
recevoir des justificatifs de connexion depuis un utilisateur pour accéder au dispositif de calcul cible, les justificatifs de connexion comprenant un secret associé à la structure locale de données (111) ; les justificatifs de connexion codant un identifiant de la structure locale de données ou le contenu de la structure locale de données dans son ensemble, conjointement avec le secret ;
authentifier l'utilisateur pour accorder un accès au dispositif de calcul cible (120) en fonction des justificatifs de connexion reçus ;
envoyer une demande de récupération au système à mémoire tampon (130), la demande de récupération étant produite en fonction des justificatifs de connexion pour demander la récupération de la structure de données mises en mémoire tampon (131) ;
recevoir, en réponse à la demande de récupération, un exemplaire (121) de la structure de données mises en mémoire tampon (131) et l'attribution d'un accès à l'exemplaire (121) reçu de la structure de données pour l'utilisateur authentifié, l'exemplaire (121) reçu de la structure de données restant le seul exemplaire permanent de la structure locale de données (111).

5. Système informatique (100) selon la revendication 4, dans lequel le dispositif de calcul source (110) est en outre conçu :
pour afficher une page d'interface d'utilisateur pour visualiser les données comprenant l'au moins une représentation numérique ;
pour produire, en réponse à un nouveau rendu de la page d'interface d'utilisateur, un code lisible par la machine destiné à l'utilisateur en tant que justificatif de connexion, le code lisible par la machine comprenant des informations codées concernant la structure locale de données (111) et le secret ;
pour recevoir un jeton d'authentification du système à mémoire tampon (130), le jeton d'authentification étant extrait du secret présent dans le code lisible par la machine ;
pour authentifier l'utilisateur par contrôle du jeton d'authentification ; et
pour envoyer une notification d'authentification concernant l'utilisateur au système à mémoire tampon (139) si le jeton d'authentification est correct ; et dans lequel le dispositif de calcul cible est en outre conçu pour :
scanner le code lisible par la machine et pour produire la demande de récupération en fonction des informations codées concernant la structure locale de données dans le code lisible par la machine scanné.

6. Système informatique (100) selon la revendication 4 ou 5, comprenant en outre :
le système à mémoire tampon (130) selon l'une quelconque des revendications 1 à 3.

7. Procédé implémenté sur ordinateur (1000) destiné à la transmission de données d'un dispositif de calcul source à un dispositif de calcul cible avec une protection améliorée des données, le procédé comprenant :
la réception (1100), par le dispositif de calcul source, de données comprenant au moins une représentation numérique d'au moins un article physique, dans lequel les articles physiques appartiennent à une sélection d'articles d'un individu particulier ;
la production (1110), au niveau du dispositif de calcul source, d'une structure locale de données et l'enregistrement de l'au moins une représentation numérique dans la structure locale de données ;
la réception (1120), au niveau du dispositif de calcul source, d'une demande de transmission pour transmettre la structure locale de données au dispositif de calcul cible ;
en réponse à la demande de transmission, la transmission (1130) d'un exemplaire de la structure locale de données à un système à mémoire tampon pour mettre en mémoire tampon la structure locale de données ;
la suppression (1140) de la structure locale de données à partir du dispositif de calcul source ;
la réception (1210), au niveau du dispositif de calcul cible, des justificatifs de connexion à partir d'un utilisateur pour accéder au dispositif de calcul cible, les justificatifs de connexion comprenant un secret associé à la structure locale de données ; les justificatifs de connexion codant un identifiant de la structure locale de données ou le contenu de la structure locale de données dans son ensemble, conjointement avec le secret ;
l'authentification (1220) de l'utilisateur pour autoriser l'accès au dispositif de calcul cible en fonction des justificatifs de connexion reçus ;
l'envoi (1230), par le dispositif de calcul cible, d'une demande de récupération au système à mémoire tampon, la demande de récupération étant produite en fonction des justificatifs de connexion pour demander la récupération de la structure de données mises en mémoire tampon ;
en réponse à la demande de récupération, la réception (1240), au niveau du dispositif de calcul cible, d'un exemplaire de la structure de données mises en mémoire tampon et l'autorisation d'accès à la structure de données reçues pour l'utilisateur authentifié, la structure de données reçue restant le seul exemplaire permanent de la structure de données.

8. Procédé implémenté sur ordinateur selon la revendication 7, dans lequel une représentation numérique particulière est reçue depuis un dispositif de balayage en réponse à la lecture par scanner d'un identifiant correspondant d'article associé à un article physique particulier respectif.

9. Procédé implémenté sur ordinateur selon la revendication 7, dans lequel une représentation numérique particulière est reçue depuis un dispositif de calcul en réponse à une entrée d'utilisateur d'un identifiant particulier d'article associé à un article physique particulier respectif.

10. Procédé implémenté sur ordinateur selon l'une quelconque des revendications 7 à 9, comprenant en outre :
l'affichage, par le dispositif de calcul source, d'une page d'interface d'utilisateur pour visualiser les données, y compris l'au moins une représentation numérique ;
en réponse à un nouveau rendu de la page d'interface d'utilisateur, la production, au niveau du dispositif de calcul source, d'un code lisible par la machine pour l'utilisateur en tant que justificatif de connexion, le code lisible par la machine comprenant des informations codées concernant la structure locale de données et le secret ;
la lecture par scanner, au niveau du dispositif de calcul cible, du code lisible par la machine et la production de la demande de récupération en fonction du code scanné lisible par la machine ;
la réception, au niveau du dispositif de calcul source, d'un jeton d'authentification à partir du système à mémoire tampon, le jeton d'authentification étant produit à partir du secret présent dans le code lisible par la machine ;
l'authentification de l'utilisateur par contrôle du jeton d'authentification au niveau du dispositif de calcul source ; et
si le jeton d'authentification est correct, l'envoi, par le dispositif de calcul source, d'une notification d'authentification concernant l'utilisateur au système à mémoire tampon.

11. Procédé implémenté sur ordinateur (2000) exécuté par un système à mémoire tampon pour la transmission de données d'un dispositif de calcul source à un dispositif de calcul cible avec protection améliorée des données, le procédé comprenant :
la réception (2100) d'un exemplaire d'une structure locale de données depuis le dispositif de calcul source, la structure de données reçues étant destinée à être transmise au dispositif de calcul cible, la structure de données reçues comprenant des données dotées d'au moins une représentation numérique d'au moins un article physique, les articles physiques appartenant à une sélection d'articles d'un individu particulier ;
la mise en mémoire tampon (2110) de la structure de données reçues ;
la réception (2120), à partir du dispositif de calcul cible, d'une demande de récupération de la structure de données mises en mémoire tampon ;
la réception (2130) d'une notification d'authentification, la notification d'authentification indiquant au système à mémoire tampon qu'un utilisateur a été authentifié en fonction des justificatifs de connexion qui ont été spécifiquement produits pour que l'utilisateur accède à la structure de données au niveau du dispositif de calcul cible, les justificatifs de connexion codant un identifiant de la structure locale de données ou du contenu de la structure locale de données dans son ensemble, conjointement avec un secret ;
en réponse à la demande de récupération et à la notification d'authentification, l'envoi d'un exemplaire de la structure de données mises en mémoire tampon au dispositif de calcul cible ; et
la suppression (2140) de la structure de données mises en mémoire tampon lors de la réception de l'exemplaire de la structure de données mises en mémoire tampon par le dispositif de calcul cible.

12. Procédé implémenté sur ordinateur selon la revendication 11, comprenant en outre :
en réponse à la réception (2100) de la structure locale de données :
la production (2101) des justificatifs de connexion ;
l'envoi (2102) des justificatifs de connexion au dispositif de calcul source ; et
l'envoi (2103) d'instructions de verrouillage au dispositif de calcul cible pour protéger le dispositif de calcul cible contre un accès non autorisé.

13. Procédé implémenté sur ordinateur selon la revendication 11 ou 12, comprenant en outre :
la réception (2131) d'un message de succès depuis le dispositif de calcul cible lors d'une réception réussie de la structure de données mises en mémoire tampon ; et
l'exécution de la suppression (2140) de la structure de données mises en mémoire tampon en réponse à la réception du message de succès et la transmission du message de succès au dispositif de calcul source comme un déclenchement pour supprimer la structure locale de données sur le dispositif de calcul source.

14. Produit de type programme informatique destiné à la transmission de données d'un dispositif de calcul source à un dispositif de calcul cible avec protection améliorée des données, le produit de type programme informatique comprenant des instructions qui, quand elles sont chargées dans les parties de mémoire correspondantes de dispositifs terminaux d'un système informatique et qu'elles sont exécutées par une pluralité de processeurs des dispositifs terminaux, amènent les dispositifs terminaux à effectuer les étapes de procédé selon l'une quelconque des revendications 7 à 10.

15. Produit de type programme informatique destiné à la transmission de données d'un dispositif de calcul source à un dispositif de calcul cible avec protection améliorée des données, le produit de type programme informatique comprenant des instructions qui, quand elles sont chargées dans une mémoire d'un système à mémoire tampon et qu'elles sont exécutées par au moins un processeur du système à mémoire tampon, amènent le système à mémoire tampon à effectuer les étapes de procédé selon l'une quelconque des revendications 11 à 13.
